(19) Europäisches Patentamt
European Patent Office
Office européen des brevets

(11) Veröffentlichungsnummer: **0 004 607**
**B1**

(12) **EUROPÄISCHE PATENTSCHRIFT**

(45) Veröffentlichungstag der Patentschrift: **03.11.82**

(21) Anmeldenummer: **79100875.8**

(22) Anmeldetag: **23.03.79**

(51) Int. Cl.³: **C 08 F 28/04** //C09D3/80, C09J3/14

(54) **Thioalkylgruppenhaltige Polymerisate.**

(30) Priorität: **08.04.78 DE 2815250**

(43) Veröffentlichungstag der Anmeldung:
**17.10.79 Patentblatt 79/21**

(45) Bekanntmachung des Hinweises auf die Patenterteilung:
**03.11.82 Patentblatt 82/44**

(84) *Benannte Vertragsstaaten:*
**BE DE FR GB IT NL**

(56) Entgegenhaltungen:
**DE - B - 1 035 646**
**DE - B - 1 124 939**

**CHEMISCHE BERICHTE, Vol. 89, Nr. 5, 1956, K. D. GUENDERMANN: "Ueber Mercapto-acrylsäure-Derivate, II Mitteil.: zum Bildungsmechanismus der alpha-Alkylmercapto-acrylnitrile", Seiten 1263—70**
**CHEMICAL ABSTRACTS, Vol. 65, 1966, Columbus, Ohio, USA, I. L. KNUNYANTS et al.: "Structure of addition products of methyl- and ethylsulfenyl chlorides to acrylic acid derivatives", Spalten 12104—12105**

(73) Patentinhaber: **BASF Aktiengesellschaft**
**Carl-Bosch-Strasse 38**
**D-6700 Ludwigshafen (DE)**

(72) Erfinder: **Naarmann, Herbert, Dr.**
**Haardtblick 15**
**D-6719 Wattenheim (DE)**
Erfinder: **Wittmer, Paul, Dr.**
**Ostring 29**
**D-6740 Landau (DE)**
Erfinder: **Stella, Lucien, Dr.**
**Rue Henri-Poincaré**
**F-13397 Marseille Cedex 4 (FR)**
Erfinder: **Janousek, Zdenek, Dr.**
**Place L. Pasteur 1**
**B-1348 Louvain-La Neuve (BE)**
Erfinder: **Merenji, Robert Dipl.Ing.**
**Place L. Pasteur 1**
**B-1348 Louvain-La Neuve (BE)**
Erfinder: **Viehe, Heinz Guenter, Dr.**
**Place L. Pasteur 1**
**B-1348 Louvain-La Neuve (BE)**

(56) Entgegenhaltungen:
**CHEMISCHE BERICHTE, Vol. 92, 1959, K. D. Guendermann: "Thioaether-Derivate von Cyclobotan-dicarbonsäuren"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 004 607 B1

# Thioalkylgruppenhaltige Polymerisate

Die Erfindung betrifft neue Thioalkylgruppen enthaltende Polymerisate.

Aus der DE—A 1 124 939 sind α-Alkylmercaptoacrylsäurealkylester als polymerisationsfreudige Verbindungen bekannt, die bei der Polymerisation glasklare, elastische Harze liefern sollen. Die erhaltenen Harze sind undefinierte Nebenprodukte, über deren Herstellung und Verwendungsmöglichkeit nichts ausgesagt ist.

In den Literaturstellen "Chemische Berichte" *1956*, S. 1266, Zeilen 13 und 14 und *1959*, S. 418 letzter Absatz wird darauf hingewiesen, daß α-Alkylmercaptoacrylnitrile nach 24 stündigem Stehenlassen kristalline Dimere bilden und daß die Dimerisierung in gewiseem Umfang durch Nebenreaktionen wie Polymerisation oder Abspaltung von Blausäure begleitet wird. Von definierten und verwendbaren Polymerisaten ist in diesen Druckschriften nicht die Rede.

Der Erfindung lag die Aufgabe zugrunde, verwendbare Polymerisate zu schaffen, die Thioalkylgruppen und darüber hinaus andere chemisch modifizierbare, funktionelle Gruppen in den Seitenketten enthalten.

Die Aufgabe wirde gelöst durch Polymerisate mit K-Werten von 20 bis 140, die Struktureinheiten der allgemeinen Formel (I):

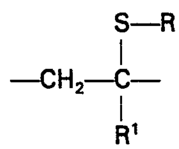

I

enthalten, worin

$R = C_1$- bis $C_8$-Alkyl und

$R^1 = C{\equiv}N$ order $CONH_2$

bedeuten.

Die polymerisate können entweder Homopolymerisate mit wiederkehrenden Einheiten der allgemeinen Formel (I) oder Copolymerisate sein, welche die Einheiten der Formel (I) und andere Struktureinheiten einpolymerisiert enthalten, die von einer oder mehreren copolymerisierbaren olefinisch ungesättigten Verbindungen abstammen.

Bevorzugt sind Polymerisate, deren Rest R ein Methyl-, Äthyl-, n-Propyl- oder iso-Butylrest ist.

Bevorzugte Copolymerisate sind diejenigen, die als copolymerisierbare olefinisch ungesättigte Verbindung Acrylsäureäthylester, Acrylnitril, Butadien, Athylen oder Styrol einpolymerisiert enthalten.

Unter Polymerisaten mit K-Werten von 20 bis 140, die Struktureinheiten der allgemeinen Formel:

(I)

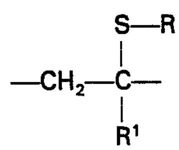

enthalten, werden oligomere oder makromolekulare Stoffe verstanden, die ganz oder im wesentlichen oder teilweise aus wiederkehrenden Einheiten der Formel:

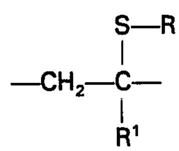

bestehen, worin der Formelteil

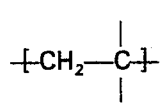

ein Teil der Polymerisatkette ist. Die Polymerisate enthalten in der Seitenkette als Substituenten sowohl den Thioalkylrest —S—R als auch den oben definierten Rest $R^1$. Die allgemeine Formel beschreibt also sowohl Homopolymerisate, die nur die oben angeführten Strukturelemente (I) enthalten, als auch Copolymerisate mit einpolymerisierten copolymerisierbaren olefinisch ungesättigten Verbindungen.

Unter K-Wert der Polymerisate wird die technische Kenngröße verstanden, die zur

Charakterisierung des Polymerisationsgrads eines Polymerisats üblich ist. Die K-Werte der erfindungsgemäßen Polymerisate wurden nach H. Fikentscher, Cellulosechemie *13* (1932) Seiten 58 bis 64 und 71 bis 74, eingewichtsprozentig in Demthylformamid bei einer Temperatur von 25°C gemessen; dabei bedeutet K=k . $10^3$.

Die erfindungsgemäßen Polymerisate werden hergestellt durch Homopolymerisation der Verbindungen (II)

II 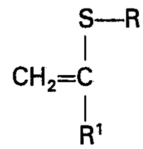

in denen R und $R^1$ die oben angeführte Bedeutung haben, oder durch Copolymerisation einer Verbindung der allgemeinen Formel II mit einem oder mehreren, mit II copolymerisierbaren olefinisch ungesättigten Monomeren in Gegenwart von Radikale bildenden Initiatoren.

Verbindungen der Formel II werden hergestellt beispielsweise aus den entsprechenden olefinisch ungesättigten $\alpha$-Chlorderivaten durch Umsetzung mit den Natriumsalzen der Alkylmercaptide. Dazu werden in Dioxan bei Temperaturen zwischen +10°C und 100°C im Molverhältnis 1:1 die beiden Komponenten zusammengegeben und nach einer Reaktionszeit von 1 bis 5 h vom abgeschiedenen NaCl abfiltriert und die Dioxanlösung, die das oben definierte Monomer enthält, aufgearbeitet.

Besonders geeignete olefinische ungesättigte, thiogruppenhaltige Monomere der Verbindungsklasse II sind die Verbindungen III bis V:

III 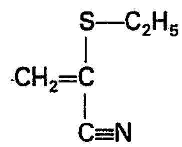 $\alpha$-Thiäthylacrylnitril

IV 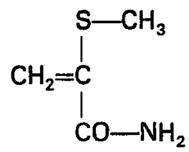 $\alpha$-Thiomethylacrylamid

V 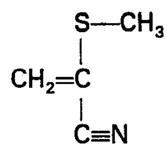 $\alpha$-Thiomethylacrylnitril

wobei die Verbindung V am besten geeignet ist.

Die Monomeren der Formel II können jeweils für sich alleine polymerisiert werden. Selbstverständlich ist es auch möglich, Gemische verschiedener dieser Verbindungen zu copolymerisieren. Außerdem sind sie der Copolymerisation mit anderen olefinisch ungesättigten Monomeren zugänglich.

Geeignete olefinisch ungesättigte Comonomere, die gegebenenfalls mit den genannten $\alpha$-Thioalkylacrylderivaten der Formeln II copolymerisiert werden können, sind beispielswise Olefine, wie Äthylen, Propylen, Butadien, Isopren; Styrol und substituierte Styrole, wie $\alpha$-Methylstyrol, p-Chlorstyrol und p-Methylstyrol; Acryl- und Methacrylsäureester, beispielsweise des Methanols, Äthanols, Butanols oder Äthylcyclohexanols, Äthylenglykols, Propylenglykols-1,2, Butylenglykols-1,3 oder des Butylenglykols-1,4; Acryl- und Methacrylsäureamid und substituierte Amide, wie N-Methylolacrylamid oder deren Äther, wie N-Methylolacrylamidbutyläther, N-Methylolmethacrylamidmethläther; Acryl- und Methacrylnitril; Vinylester wie Vinylacetat, Vinylpropionat; Vinyläther, wie Methyl-, Äthyl, oder Alkylvinyläther mit Alkylresten mit 3 bis 6 Kohlenstoffatomen; ferner Fumar-, Malein- oder Itaconsäure, Ester dieser Säuren und Maleinsäureanhydrid. Von den vorstehend genannten Verbindungen können auch gleichzeitig zwei oder mehr mit den gennanten $\alpha$-Thioalkylacrylderivaten (II) copolymerisiert werden.

Für die Herstellung von Copolymerisaten kann der Anteil an olefinisch ungesättigten $\alpha$-Thioacrylderivaten (II) im Monomerengemisch in weiten Grenzen schwanken, beispielsweise zwischen 1 und 99, insbesondere zwischen 5 und 80, vorzugsweise zwischen 8 und 60 Gewichtspronzent, bezogen auf das Gesamtgewicht der Monomeren.

Zur Auslösung der Polymerisation werden übliche Radikale bildende Initiatoren verwendet. Geeignete Initiatoren sind beispielsweise Wasserstoffperoxid, organische Hydroperoxide und Peroxide, wie Caproylperoxid, Lauroylperoxid, t-Butylperbenzoat, Dicumylperoxid, p-Menthanhydroperoxid,

Cumolhydroperoxid, Bernsteinsäureperoxid, ferner unter Polymerisationsbedingungen in Radikale zerfallende aliphatische Azoverbindungen, wie 2,2'-Azo-bis-2,4-dimethylvaleronitril, 2,2'-Azo-bis-isobutyronitril und analoge Azonitrile, die beispielsweise in J. Hine "Reaktivität und Mechanismus in der organischen Chemie", Verlag Georg Thieme, Stuttgart (1960), Seite 412, aufgeführt sind, sowie übliche Redoxkatalysatorsysteme, wie die Systeme Kalium- oder Ammoniumpersulfat und Ascorbinsäure, Natriumhydrosulfit oder Eisen-II-salze.

Geeignet sind ferner die als Radikalbildner bekannten Chelate von Übergangsmetallen, wie Chelate des Mangan (III), Kobalt (III), Kupfer (II) und Cer (IV). Im allgemeinen werden als Chelatibildner 1,3-Dicarbonylverbindungen verwendet. Als Beispiele seien genannt Mangan (III)-acetylacetonat und Kobalt (III)-acetessigester. Außerdem kann die Polymerisation auch durch Strahlung, gegebenenfalls in Gegenwart von Sensibilisatoren, wie Benzoinderivaten, ausgelöst werden.

Die Initiatoren werden im allgemeinen in einer Menge von 0,05 bis 5 Gewichtsprozent, vorzugsweise 0,1 bis 1,0 Gewichtsprozent, bezogen auf die Monomerenmenge, verwendet. Die optimale Menge und der optimal wirksame Initiator lassen sich durch Versuche leicht ermitteln. Die Polymerisation kann in Substanz durchgeführt werden. Vorteilhaft arbeitet man jedoch in Gegenwart von Lösungs- oder Verdünnungs-mitteln. Geeignet sind beispielsweise Ketone, wie Methyläthyl- oder Methylpropylketon, Äther wie Diäthyläther, Tetrahydrofuran oder Dioxan; aliphatische, cycloaliphatische oder aromatische Kohlenwasserstoffe, wie Hexan, Heptan, Cyclohexan, Benzol oder Toluol, gut geeignet ist auch Dimethylformamid.

Die für eine Vielfalt anderer Monomerer oder Monomerengemische üblichen Suspensions- oder Lösungspolymerisationsverfahren sind auch für das Verfahren zur Herstellung der erfindungsgemäßen Polymerisate geeignet. Auch bezüglich der gegebenenfalls verwendeten Hilfsmittel, wie Dispergiermittel, Schutzkolloide und dergleichen unterscheidet sich dieses Verfahren nicht von bekannten.

Die Polymerisation kann in einem weiten Temperaturbereich, etwa zwischen 0 und 150°C, vorzugsweise zwischen 50 und 120°C bei Reaktionszeiten von 1 bis 20 Stunden, vorzugsweise 2 bis 10 Stunden durchgeführt werden. Man arbeitet im allgemeinen bei Atmosphärendruck, doch können auch höhere Drucke angewandt werden. Insbesondere bei Copolymerisationen mit niedrigsiedenden Comonomeren ist die Verwendung von höheren Drucken angezeigt, um eine ausreichende Konzentration des Comonomeren im Reaktionsgemisch zu bewirken.

Die Copolymerisation der olefinisch ungesättigten Verbindungen (II) mit Äthylen oder Butadien wird vorteilhaft in aliphatischen oder aromatischen Lösungsmitteln durchgeführt, indem man die miteinander copolymerisierbaren Monomeren in das Lösungsmittel, das einen Initiator enthält einbringt und bei erhöhtem Druck, bei Athylen als Comonomeren bis etwa 2000 atü, polymerisiert.

Die Copolymerisation mit Acrylsäureestern wird zweckmäßig in aromatischen oder aliphatischen Kohlenwasserstoffen unter den für die Polymerisation von Acrylsäureestern bekannten Bedingungen durchgeführt.

Aufgrund der Thioalkylgruppe sind diese Polymerisate reaktiv und gegebenenfalls weiteren Reaktionen zugänglich. Die Polymerisate können beispielsweise intermolekular$_+$ vernetzt, pfropfpolymerisiert oder vulkanisiert werden. Ferner ist es möglich, die S-Gruppe in die —S — Gruppe zu überführen und durch thermische Spaltung die S-Gruppe zu eliminieren.

Die erfindungsgemäßen Polymerisate, die K-Werte von 20 bis 140, vorzugsweise von 50 bis 90 aufweisen, sind aufgrund ihres Gehaltes an $\alpha$-Thioalkylgruppen leicht anfärbbar. Sie werden beispielsweise für die Herstellung von Formkörpern, schlagfesten Massen, Überzügen oder Klebmitteln, auch im Gemisch mit anderen Kunststoffen, z.B. mit Polyäthylen, Polypropylen oder mit Mischpolymerisaten aus Vinylacetat und Äthylen, verwendet. Wegen ihrer oberflächenaktiven Eigenschaften sind die Polymerisate unter anderem auch zum Veredeln von Papier und Textilien geeignet.

Da die thioalkylgruppenhaltigen Polymerisate durch Oxidation in Sulfone bzw. Sulfoxide übergeführt werden, werden die Produkte auch als Sauerstoffänger verwendet.

Von besonderem technischen Interesse sind ferner Copolymerisate der olefinisch ungesättigten thioalkylgruppenhaltigen Derivate (II) mit Acrylsäureestern. Diese Produkte sind löslich, hochmolekular, mit Pigmenten mischbar. Solche Copolymerisate sind vorzüglich als Lacke verwendbar.

Die in den Beispielen genannten Teile und Prozente beziehen sich auf das Gewicht. Sofern kein anderes Lösungsmittel genannt wird, wurden die K-Werte jeweils eingewichtsprozentig in Dimethylformamid nach der Vorschrift von H. Fikentscher, Cellulosechemie *13*, (1932), Seite 58 bestimmt.

Beispiel 1

4 Teile Acrylnitril und 6 Teile Verbindung III werden in Gegenwart von 0,1 Teilen Azo-bis-isobuttersäurenitril 2 Stunden bei 70°C polymerisiert. Das Copolymerisat besitzt einen K-Wert von 72 und enthält 59 Gewichtspronzent an einpolymerisierter Verbindung III. Der Umsatz liegt bei 90%.

Beispiel 2

Eine Lösung aus 100 Teilen Toluol, 10 Teilen Verbindung IV, 290 Teilen Styrol und 3 Teilen Azo-bis-isobutyronitril wird unter Rühren 8 Stunden auf 90°C erwärmt. Man erhält 300 Teile eines Copolymerisates mit einem K-Wert von 48 (0,5 gewichtsprozentig in Toluol) und einem Gehalt an Verbindung VI von ca. 3 Gewichtsprozent.

Beispiel 3

6 Teile Verbindung V werden in Gegenwart von 0,01 Teilen Azo-bis-isobutyronitril 2 Stunden auf 70°C erhitzt. Man erhält 5,5 Teil Homopolymerisat der Verbindung V mit einem K-Wert von 47 (1 gewichtsprozentig in Dioxan).

Beispiel 4

Wird analog den Angaben des Beispiels 3 gearbeitet, jedoch die Verbindung IV als Monomeres verwendet, so erhält man 4,9 Teile eines Homopolymerisats vom K-Wert 49.

**Patentansprüche**

1. Polymerisate mit K-Werten von 20 bis 140, die Struktureinheiten der allgemeinen Formel (I):

I

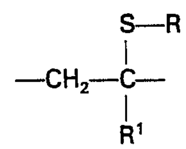

enthalten, worin

$R = C_1$- bis $C_8$-Alkyl und

$R^1 = C{\equiv}N$ oder $CONH_2$

bedeuten.

2. Polymerisate nach Anspruch 1, dadurch gekennzeichnet, daß es Homopolymerisate mit wiederkehrenden Einheiten der allgemeinen Formel (I) sind.

3. Polymerisate nach Anspruch 1, dadurch gekennzeichnet, daß es Copolymerisate sind, welche Einheiten der Formel (I) und andere Strucktureinheiten einpolymerisiert enthalten, die von einer oder mehreren copolymerisierbaren olefinisch ungesättigten Verbindungen abstammen.

4. Copolymerisate nach Anspruch 3, dadurch gekennzeichnet, daß die copolymerisierbare Verbindung Acrylsäureäthylester ist.

5. Copolymerisate nach Anspruch 3, dadurch gekennzeichnet, daß die copolymerisierbare Verbindung Acrylnitril ist.

6. Copolymerisate nach Anspruch 3, dadurch gekennzeichnet, daß die copolymerisierbare Verbindung Butadien ist.

7. Copolymerisate nach Anspruch 3, dadurch gekennzeichnet, daß die copolymerisierbare Verbindung Äthylen ist.

8. Copolymerisate nach Anspruch 3, dadurch gekennzeichnet, daß die copolymerisierbare Verbindung Styrol ist.

**Revendications**

1. Polymères ayant des valeurs K comprises entre 20 et 140 et contenant des unités structurelles de formule générale (I)

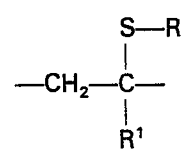

(I)

dans laquelle

R représente un alcoyle en $C_1$ à $C_8$ et

$R^1$ représente $C{\equiv}N$ ou $CONH_2$.

2. Polymères selon la revendication 1, caractérisés en ce que ce sont des homopolymères contenant à répétition des unités de formule générale (I).

3. Polymères selon la revendication 1, caractérisés en ce que ce sont des copolymères qui contiennent en liaison polymère des unités de formule (I) et d'autres unités structurelles qui proviennent d'un ou de plusieurs composés oléfiniquement insaturés copolymérisables.

4. Copolymères selon la revendication 3, caractérisés en ce que le composé copolymérisable est l'acrylate d'éthyle.

5. Copolymères selon la revendication 3, caractérisés en ce que le composé copolymérisable est l'acrylonitrile.

6. Copolymères selon la revendication 3, caractérisés en ce que le composé copolymérisable est le butadiène.

7. Copolymères selon la revendication 3, caractérisés en ce que le composé copolymérisable est l'éthylène.

8. Copolymères selon la revendication 3, caractérisés en ce que le composé copolymérisable est le styrène.

## Claims

1. Polymers which have K-values of from 20 to 140 and which contain structural units of the general formula (I)

I

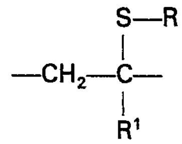

where $R_1$ denotes $C_1$—$C_8$-alkyl and $R_2$ denotes C≡N or $CONH_2$.

2. Polymers according to claim 1, characterized in that they are homopolymers having recurring units of the general formula (I).

3. Polymers according to claim 1, characterized in that they are copolymers which contain copolymerized units of the formula (I) and other copolymerized structural units, derived from one or more copolymerizable olefinically unsaturated compounds.

4. Copolymers according to claim 3, characterized in that the copolymerizable compound is ethyl acrylate.

5. Copolymers according to claim 3, characterized in that the copolymerizable compound is acrylonitrile.

6. Copolymers according to claim 3, characterized in that the copolymerizable compound is butadiene.

7. Copolymers according to claim 3, characterized in that the copolymerizable compound is ethylene.

8. Copolymers according to claim 3, characterized in that the copolymerizable compound is styrene.